(19) Europäisches Patentamt

European Patent Office

Office européen des brevets

(11) **EP 0 944 979 B1**

(12) **FASCICULE DE BREVET EUROPEEN**

(45) Date de publication et mention
de la délivrance du brevet:
**28.07.2004   Bulletin 2004/31**

(51) Int Cl.⁷: **H04L 27/26**

(86) Numéro de dépôt international:
**PCT/FR1997/002242**

(21) Numéro de dépôt: **97951282.9**

(22) Date de dépôt: **09.12.1997**

(87) Numéro de publication internationale:
**WO 1998/026546 (18.06.1998 Gazette 1998/24)**

(54) **PROCEDE DE TRANSMISSION OU DE RADIODIFFUSION NUMERIQUE**

VERFAHREN FÜR DIGITALE KOMMUNIKATION ODER DIGITALEN RUNDFUNK

METHOD FOR DIGITAL TRANSMISSION OR RADIO BROADCAST

(84) Etats contractants désignés:
**CH DE FR GB LI**

(30) Priorité: **13.12.1996   FR 9615362**

(43) Date de publication de la demande:
**29.09.1999   Bulletin 1999/39**

(73) Titulaire: **Thales**
**75008 Paris (FR)**

(72) Inventeur: **LAURENT, Pierre, André**
**Thomson-CSF S.C.P.I.**
**F-94117 Arcueil Cedex (FR)**

(56) Documents cités:
**EP-A- 0 549 445        EP-A- 0 591 643**
**WO-A-95/28773        WO-A-95/34149**
**US-A- 5 479 447**

## Description

La présente invention concerne un procédé de transmission ou de radiodiffusion numérique.

Elle s'applique notamment à la réalisation de systèmes permettant d'assurer une radiodiffusion de signaux numérique en modulation d'amplitude dans la gamme des ondes courtes.

Il est connu pour transmettre les données dans la gamme des ondes courtes d'utiliser des procédés de modulation de plusieurs porteuses en parallèle. De tels procédés, tel que celui décrit par exemple dans la demande de brevet EP-A-0 549 445 déposé au nom de la Demanderesse, permettent d'obtenir un spectre de fréquence du signal émis de type rectangulaire bien délimité dans le domaine fréquentiel dont la largeur de bande peut être considérée comme étant quasiment égale à l'espacement entre canaux sans qu'il y ait d'interférence notable entre canaux voisins. L'intérêt d'un tel procédé est qu'il nécessite, lorsque les porteuses sont modulées par des signaux numérique à plusieurs états d'amplitude et de phase, un rapport signal à bruit nettement inférieur à celui qui est généralement requis par les procédés de modulation analogique d'une porteuse pure.

Il présente également l'intérêt de garantir au niveau des récepteurs une qualité de restitution toujours acceptable car celle-ci ne dépend en grande partie que du nombre de porteuses utilisées. Typiquement la bande de fréquence minimale requise est de 3 KHz pour les liaisons à bande latérale unique ce qui autorise des débits à 8 Kb/s.

En pratique chaque émetteur est dédié à une utilisation sur une bande de fréquence déterminée, et un même émetteur ne peut être utilisé pour satisfaire aussi bien des petits utilisateurs que sont par exemple les radio amateurs, que des radiodiffuseurs qui souhaitent travailler sur des bandes de fréquences variables, ajustables en fonction de la qualité souhaitée. Ceci est très contraignant pour les radiodiffuseurs qui doivent acquérir pour chaque bande de fréquence un dispositif de modulation adapté à chaque domaine d'utilisation.

Le but de l'invention est de pallier les inconvénients précités.

A cet effet, l'invention a pour objet , un procédé de transmission de radiodiffusion numérique à débit de transmission modulable du type consistant à transmettre les informations numériques par modulation de plusieurs porteuses en parallèle en générant périodiquement un groupe de base comprenant un nombre déterminé M de trames elles-mêmes composées d'un nombre déterminé de porteuses de durée déterminée T et occupant une bande fréquentielle déterminée B, le motif de base étant constitué d'une première trame de synchronisation temporelle de forme connue, suivie de trames de symboles de signal, caractérisé en ce qu'il consiste, pour augmenter le débit binaire des informations transmises par l'émetteur, à adjoindre au groupe de base des groupes additionnels disjoints composés uniquement d'un nombre déterminé de trames de symboles de signal portés par un nombre déterminé de fréquences porteuses.

L'invention présente l'avantage d'une grande souplesse d'utilisation car elle permet d'adapter la largeur de la bande de fréquence d'un émetteur chaque fois en fonction de la qualité ou du débit binaire qui sont caractéristiques d'une utilisation déterminée, sans pour cela exiger de modifications notables de structure des émetteurs. Elle permet également, d'assurer une synchronisation initiale entre émetteur et récepteurs dans un temps très faible qui est typiquement inférieur à 1 seconde dans les utilisations en radiodiffusion, et de détecter les interférences bande étroite tout en en éliminant les effets.

D'autre part, grâce au procédé de l'invention, la puissance de calcul nécessaire pour permettre à un récepteur de récupérer les données numériques transmises est aussi réduite que possible.

D'autres caractéristiques et avantages de l'invention apparaîtront à l'aide de la description qui suit et qui est faite en regard des figures des dessins annexés qui représentent :

La figure 1, le spectre en fréquence d'un signal émis selon une modulation multi porteuses selon l'invention.
La figure 2, le principe de modulation par groupes à multi porteuses additionnels selon l'invention.
Les figures 3A, 3B, 3C et 3D des exemples d'agencement de groupes additionnels en fonction de débits binaires de transmission escomptés.
La figure 4, le format du signal dans un espace temps-fréquence.

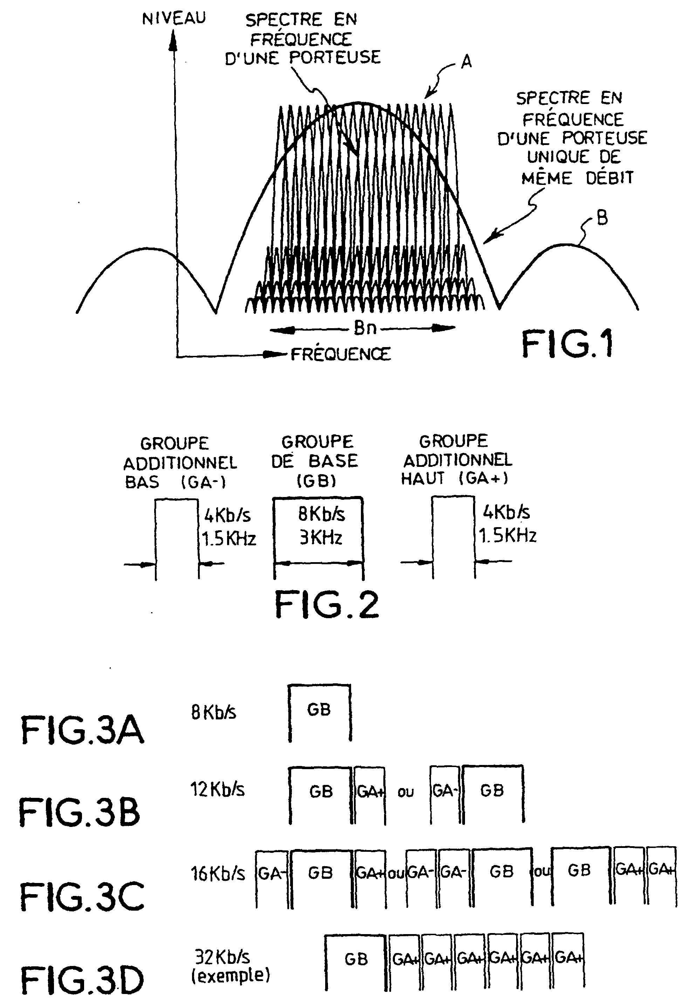

Le spectre du signal émis pour la mise en oeuvre de l'invention est celui résultant d'une émission, par plusieurs modulateurs couplés en parallèle, de signaux sur un grand nombre de porteuses. Ces porteuses sont, comme le montre la figure 1, régulièrement espacées tout en étant modulées indépendamment les unes des autres. Elles sont modulées en amplitude suivant un procédé connu de modulation d'amplitude sur deux voies en quadrature, encore connue sous l'abréviation MAQ.

Afin de mieux résister au bruit et aux interférences, le signal modulé peut également être codé selon le procédé connu sous l'abréviation anglo-saxonne TCM de Treillis Coded Modulation, consistant à grouper les bits d'informations à transmettre en paquets d'un nombre déterminé m de bits en associant à chaque paquet une forme d'onde particulière parmi un nombre déterminé M ou M est supérieur à $2^m$ et de l'ordre de 2 à 4 fois $2^m$.

Comme le montre la figure 1, le spectre du signal résultant qui est représenté par la courbe A, est la somme des spectres en fréquence de toutes les porteuses et occupe une bande de largeur B$_n$. Grâce à l'étroitesse du spectre en fréquence des porteuses individuelles, le spectre en fréquence du signal numérique est ainsi très bien délimité contrairement à celui représenté par la courbe en pointillés B qui serait obtenu pour le même débit binaire avec une porteuse unique modulée de la même façon.

Pour permettre d'élargir la bande de fréquence B$_n$ et par suite le débit des données transmises, le procédé selon l'invention consiste à effectuer une construction modulaire du spectre, en décomposant le spectre en un groupe de porteuses de base "GB" auquel est ajouté un ou plusieurs groupes de porteuses additionnels "GA". Le groupe de porteuses de base, occupe la largeur de bande de fréquence minimale requise pour le fonctionnement de l'émetteur, à savoir, par exemple, une bande de largeur 3 KHz. Ce groupe comporte tout ce qui est nécessaire à la synchronisation initiale du récepteur et à la transmission des informations avec un débit binaire minimum de 8 Kbit/s par exemple, ainsi que toutes les informations fortement protégées définissant le format exact du signal transmis. Les groupes de porteuses additionnels, sont de préférence définis de manière identique pour permettre une augmentation graduelle du débit binaire et atteindre les conditions de débit requises. A titre d'exempte, en calibrant la bande passante de chaque groupe additionnel avec une largeur de bande de 1,5 KHz on obtient des augmentations de débit par pas de 4 Kb/s. Les groupes additionnels "GA" peuvent être conçus comme le montre la figure 2 sous deux formes symétriques pour permettre un élargissement de la bande passante de l'émetteur dans les fréquences basses ou dans les fréquences hautes. Ils peuvent également être adjoints au groupe de base dans le domaine fréquentiel soit du côté des fréquences basses, soit du côté des fréquences hautes ou encore de part et d'autre du groupe de base comme le montre les figures 3A à 3D dont les plans de fréquence correspondent à des variations de débit comprises entre 8 et 32 Kb/s par pas de 4 Kb/s.

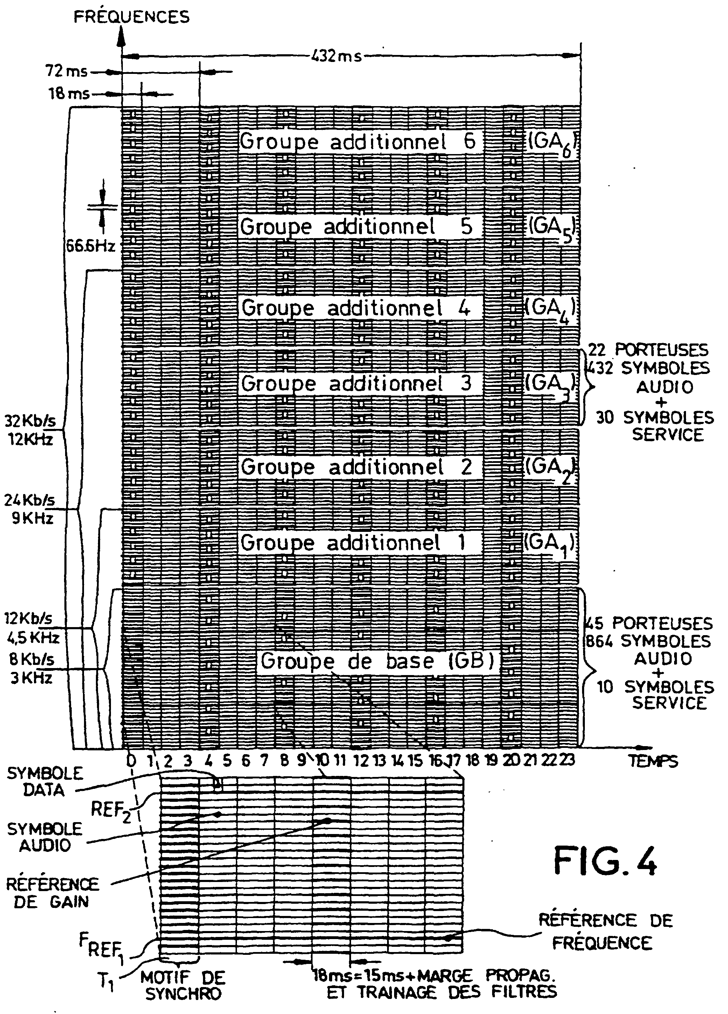

Ainsi que le montre le diagramme temps-fréquence de la figure 4, le signal temporel obtenu qui correspond dans le domaine fréquentiel à un groupe de base, est un signal découpé suivant un nombre déterminé L de trames adjacentes T$_i$. Chaque trame est composée d'un nombre déterminé N de porteuses adjacentes. Pendant toute la durée d'une trame, l'amplitude complexe de toutes les porteuses est constante. En considérant par exemple que la durée d'un symbole utile à transmettre est de 15 ms, la durée d'une trame est fixée par exemple à 18 ms ce qui laisse 3 ms de marge pour tenir compte de la propagation et du traînage des signaux dans les filtres de l'émetteur et du récepteur. L'espacement entre fréquences est déterminé pour être égal à l'inverse de la durée d'un symbole, soit dans l'exemple égal à $\frac{1}{15ms}$ = 66,666 Hz, ce qui correspond, pour obtenir une bande de fréquence de 3 KHz, à un nombre de porteuses N égal à 45. Cette disposition assure l'orthogonalité des signaux qui est nécessaire pour qu'il n'y ait pas de phénomène d'interférence entre symboles lors de la démodulation. Cet espacement en fréquence tient compte également de l'instabilité prévisible des oscillateurs des récepteurs et de la vitesse d'évolution du canal de transmission. Dans l'exemple de la figure 4 les trames sont regroupées en paquets d'un nombre déterminé K=4 de trames. Dans la première trame de chaque paquet, la moitié des fréquences comporte un symbole "référence de gain" d'amplitude complexe connue dénommé référence de gain sur la figure 4 qui sert de référence pour estimer à la fois le gain du canal et le bruit à sa position et aux positions voisines. Le nombre de références est déterminé pour permettre l'échantillonnage convenable de la réponse en fréquence complexe du canal compte tenu de sa vitesse de variation et de son étalement temporel. Tantôt les fréquences paires tantôt les fréquences impaires sont utilisées afin de pouvoir détecter la présence de brouilleurs à bande étroite quelle que soit leur fréquence.

Un nombre limité de fréquences de référence "REF$_1$" et" REF$_2$" en traits pleins sur la figure 4, sont des porteuses pures, non modulées. Ces fréquences de référence sont destinées à faciliter l'accrochage initial des récepteurs dans les plus brefs délais quel que soit leur décalage en fréquence initiale.

Enfin, les paquets sont eux-mêmes regroupés dans un motif comportant un nombre déterminé de M paquets. Sur la figure 4, M = 6 ce qui correspond à une durée de motif de 432 ms. Dans le premier de tous les paquets, certaines des fréquences de la première trame T$_1$ du paquet qui contiennent des symboles utiles, sont remplacées par des fréquences de références afin d'obtenir une forme d'onde compacte en temps et en fréquence permettant d'obtenir une synchronisation rapide des récepteurs. Cette synchronisation peut être effectuée de façon connue par corrélation de la forme d'onde reçue à celle attendue.

Les symboles utiles se subdivisent en deux catégories.

Une première catégorie concerne les symboles de service. Ceux-ci sont transmis par exemple, suivant une modulation MAQ à 16 états d'amplitude et de phase véhiculant chacun 3 bits d'information. Ils sont régulièrement disposés en temps et en fréquence et répétés dans plusieurs trames, trois par exemple, pour augmenter leur probabilité de bonne réception compte tenu de leur importance. Dans l'exemple de la figure 4, les symboles de service sont au nombre de 5.

Avec une durée de motif de 288 ms, les 15 bits d'information qui correspondent à ces 5 symboles conduisent à un débit de 52,1 bits/s. Pour un motif de 432 ms et avec 10 symboles de 3 bits, le débit est porté à 69,4 b/s.

Une deuxième catégorie concerne les symboles audio. Ceux-ci sont aussi transmis en modulation MAQ à 64 états d'amplitude et de phase véhiculant chacun 4 bits d'information par exemple. Ceux-ci constituent la plus grande partie du débit.

A la différence des symboles de service, les symboles audio sont transmis sans répétition et indépendamment des conditions de réception. Pour une durée de motif de 288 ms et en considérant 576 symboles de 4 bits, soit 2 304 bits le débit correspondant est de 8 Kb/s.

Les groupes additionnels $GA_1$ à $GA_n$ ont tous la même structure. Leur découpage temporel est similaire à celui du groupe de base GB, à ceci près qu'ils ne comportent pas de fréquences porteuses fixes ni motif de synchronisation. A titre d'exemple, $N_a$ = 22 fréquences sont nécessaires pour conférer à chaque groupe additionnel une bande passante de 1,5 KHz. Comme dans le groupe de base GB, les trames d'un groupe additionnel GA sont regroupées par paquets de même structure et la même continuité est assurée. Egalement les symboles utiles sont distribués suivant deux catégories. Une première catégorie concerne les symboles de service. Ceux-ci sont par exemple transmis suivant une modulation MAQ à 16 états de phase et d'amplitude véhiculant chacun trois bits d'information. Contrairement aux symboles de service du groupe de base ceux-ci n'ont pas besoin d'être répétés ce qui permet d'accroître le débit utile des données non audio.

A titre d'exemple, pour une durée de motif de 288 ms cela conduit avec 20 symboles de données par groupe additionnel, à 80 bits et à un débit de 208,3 bits/s. Une deuxième catégorie concerne les symboles audio. Ceux-ci sont par exemple transmis suivant une modulation MAQ à 64 états de phase et d'amplitude véhiculant chacun 4 bits d'information. Pour une durée de motif de 288 ms et 288 symboles cela correspond à 1 152 bits transmis avec un débit de 4 Kb/s ou éventuellement 864 bits avec un débit de 3 kb/s dans un mode dégradé ou lorsque les conditions de réception sont mauvaises.

Revendications

1. Procédé de transmission de radiodiffusion numérique à débit de transmission modulable du type consistant à transmettre les informations numériques par modulation de plusieurs porteuses en parallèle en générant périodiquement un groupe de base (GB) comprenant un nombre déterminé M de trames elles-mêmes composées d'un nombre déterminé de porteuses de durée déterminée T et occupant une bande fréquentielle déterminée B, le motif de base (GB) étant constitué d'une première trame de synchronisation temporelle ($T_1$) de forme connue, suivie de trames de symboles de signal, **caractérisé en ce qu'**il consiste, pour augmenter le débit binaire des informations transmises par l'émetteur, à adjoindre au groupe de base (GB) des groupes additionnels (GA) disjoints composés uniquement d'un nombre déterminé de trames de symboles de signal portés par un nombre déterminé de fréquences porteuses.

2. Procédé selon la revendication 1, **caractérisé en ce que** les groupes additionnels (GA) sont adjoints au groupe de base (GB) du côté des fréquences hautes.

3. Procédé selon la revendication 1, **caractérisé en ce que** les groupes additionnels (GA) sont adjoints au groupe de base (GB) du côté des fréquences basses.

4. Procédé selon la revendication 1, **caractérisé en ce que** les groupes additionnels (GA) sont adjoints de part et d'autre du groupe de base (GB).

5. Procédé selon l'une quelconque des revendications 1 à 4, **caractérisé en ce que** les trames d'un groupe de base sont regroupées en paquets d'un nombre déterminé K de trames, la première trame de chaque paquet comportant des fréquences de référence d'amplitude complexe connues des récepteurs pour l'estimation des transmissions.

6. Procédé selon la revendication 5, **caractérisé en ce que** les trames d'un groupe de base comportent des fréquences pures en nombre déterminé pour permettre l'accrochage des récepteurs.

7. Procédé selon l'une quelconque des revendications 1 à 6, **caractérisé en ce que** les trames de symboles d'un groupe de base comportent des symboles de service et des symboles audio.

8. Procédé selon la revendication 7, **caractérisé en ce que** les symboles de service d'un groupe de base sont transmis par répétition dans plusieurs trames suivant une modulation MAQ à plusieurs états d'amplitude et de phase véhiculant chacun un nombre déterminé de bits d'information.

9. Procédé selon la revendication 7, **caractérisé en ce que** les symboles audio d'un groupe de base sont transmis sans répétition suivant une modulation MAQ à plusieurs états d'amplitude et de phase véhiculant chacun un nombre déterminé de bits d'information.

10. Procédé selon l'une quelconque des revendications 1 à 9, **caractérisé en ce que** les groupes additionnels ont tous la même structure et comportent des symboles de services et des symboles audio qui sont transmis suivant une modulation MAQ à plusieurs états d'amplitude et de phase véhiculant chacun un nombre déterminé de bits d'information transmis sans répétition.

**Patentansprüche**

1. Verfahren zur digitalen Funkübertragung mit modulierbarem Übertragungsdurchsatz des Typs, der darin besteht, die digitalen Daten durch Modulation mehrerer Trägerwellen parallel und durch periodisches Erzeugen einer Basisgruppe (GB), die eine bestimmte Anzahl M von Rahmen hat, die selbst aus einer bestimmten Anzahl von Trägerwellen mit festgelegter Dauer T bestehen und ein bestimmtes Frequenzband B belegen, zu übertragen, wobei das Basismuster (GB) aus einem ersten zeitlichen Synchronisationsrahmen ($T_1$) bekannter Form besteht, gefolgt von Signalsymbolrahmen, **dadurch gekennzeichnet, dass** es darin besteht, zum Steigern des binären Durchsatzes der vom Sender übertragenen Daten zur Basisgruppe (GB) getrennte Zusatzgruppen (GA) hinzuzufügen, die ausschließlich aus einer bestimmten Anzahl von Signalsymbolrahmen bestehen, die von einer bestimmten Anzahl von Trägerwellenfrequenzen getragen werden.

2. Verfahren nach Anspruch 1, **dadurch gekennzeichnet, dass** die Zusatzgruppen (GA) auf der Seite der hohen Frequenzen zur Basisgruppe (GB) hinzugefügt werden.

3. Verfahren nach Anspruch 1, **dadurch gekennzeichnet, dass** die Zusatzgruppen (GA) auf der Seite der niedrigen Frequenzen zur Basisgruppe (GB) hinzugefügt werden.

4. Verfahren nach Anspruch 1, **dadurch gekennzeichnet, dass** die Zusatzgruppen (GA) zu beiden Seiten der Basisgruppe (GB) hinzugefügt werden.

5. Verfahren nach einem der Ansprüche 1 bis 4, **dadurch gekennzeichnet, dass** die Rahmen einer Basisgruppe in Paketen mit einer bestimmten Anzahl K von Rahmen gruppiert werden, wobei der erste Rahmen jedes Pakets Referenzfrequenzen mit komplexer Amplitude umfasst, die die Empfänger zur Bewertung der Übertragungen kennen.

6. Verfahren nach Anspruch 5, **dadurch gekennzeichnet, dass** die Rahmen einer Basisgruppe reine Frequenzen in einer bestimmten Anzahl enthalten, um das Aufschalten des Empfängers zu erlauben.

7. Verfahren nach einem der Ansprüche 1 bis 6, **dadurch gekennzeichnet, dass** die Symbolrahmen einer Basisgruppe Service- und Audiosymbole umfassen.

8. Verfahren nach Anspruch 7, **dadurch gekennzeichnet, dass** die Servicesymbole einer Basisgruppe durch Wiederholen in mehreren Rahmen gemäß einer MAQ-Modulation mit mehreren Amplituden- und Phasenzuständen übertragen werden, die jeder eine bestimmte Anzahl von Datenbit befördern.

9. Verfahren nach Anspruch 7, **dadurch gekennzeichnet, dass** die Audiosymbole einer Basisgruppe ohne Wiederholen gemäß einer MAQ-Modulation mit mehreren Amplituden- und Phasenzuständen übertragen werden, die jeder eine bestimmte Anzahl von Datenbit befördern.

10. Verfahren nach einem der Ansprüche 1 bis 9, **dadurch gekennzeichnet, dass** die Zusatzgruppen alle den gleichen Aufbau haben und Servicesymbole und Audiosymbole enthalten, die gemäß einer MAQ-Modulation mit mehreren Amplituden- und Phasenzuständen übertragen werden, die jeder eine bestimmte Anzahl von Datenbit ohne Wiederholung befördern.

**Claims**

1. Method of digital radiobroadcast transmission with modulatable transmission rate of the type consisting in transmitting the digital information by modulating several carriers in parallel by periodically generating a base group (GB) comprising a determined number M of frames themselves composed of a determined number of carriers of determined duration T and occupying a determined frequency band B, the base pattern (GB) consisting of a first time synchronization frame ($T_1$) of known shape, followed by frames of signal symbols, **characterized in that** it consists, in order to increase the bit rate of the information transmitted by the transmitter, in supplementing the base group (GB) with disjoint additional groups (GA) composed solely of a determined number of frames of signal symbols carried by a determined number of carrier frequencies.

2. Method according to Claim 1, **characterized in that** the base group (GB) is supplemented with the additional groups (GA) on the high frequencies side.

3. Method according to Claim 1, **characterized in that** the base group (GB) is supplemented with the additional groups (GA) on the low frequencies side.

4. Method according to Claim 1, **characterized in that** the base group (GB) is supplemented with the additional groups (GA) on both sides.

5. Method according to any one of Claims 1 to 4, **characterized in that** the frames of a base group are grouped together in packets of a determined number K of frames, the first frame of each packet comprising reference frequencies of complex amplitude that are known to the receivers for the estimation of the transmissions.

6. Method according to Claim 5, **characterized in that** the frames of a base group comprise pure frequencies in number determined to allow the locking on of the receivers.

7. Method according to any one of Claims 1 to 6, **characterized in that** the frames of symbols of a base group comprise service symbols and audio symbols.

8. Method according to Claim 7, **characterized in that** the service symbols of a base group are transmitted by repetition in several frames according to a QAM modulation with several amplitude and phase states each conveying a determined number of information bits.

9. Method according to Claim 7, **characterized in that** the audio symbols of a base group are transmitted without repetition according to a QAM modulation with several amplitude and phase states each conveying a determined number of information bits.

10. Method according to any one of Claims 1 to 9, **characterized in that** the additional groups all have the same structure and comprise service symbols and audio symbols which are transmitted according to a QAM modulation with several amplitude and phase states each conveying a determined number of information bits transmitted without repetition.

NIVEAU

SPECTRE EN FRÉQUENCE D'UNE PORTEUSE

A

SPECTRE EN FRÉQUENCE D'UNE PORTEUSE UNIQUE DE MÊME DÉBIT

B

$B_n$

FRÉQUENCE

**FIG.1**

GROUPE ADDITIONNEL BAS (GA-)

4Kb/s 1.5KHz

GROUPE DE BASE (GB)

8Kb/s 3KHz

GROUPE ADDITIONNEL HAUT (GA+)

4Kb/s 1.5KHz

**FIG.2**

**FIG.3A**   8Kb/s   GB

**FIG.3B**   12Kb/s   GB GA+ ou GA- GB

**FIG.3C**   16Kb/s   GA- GB GA+ ou GA- GA- GB ou GB GA+ GA+

**FIG.3D**   32Kb/s (exemple)   GB GA+ GA+ GA+ GA+ GA+ GA+

FIG.4